# EUROPEAN PATENT APPLICATION

(11) **EP 4 442 134 A1**
(43) Date of publication of application: **09.10.2024**
(21) Application number: 21966314.3
(22) Date of filing: 30.11.2021
(51) Int. Cl.: A24F 40/40, A24F 40/95

(54) **SUCTION DEVICE**

(71) Applicant: Japan Tobacco Inc., Tokyo 105-6927 (JP)
(72) Inventor: YOSHIDA Ryo, Tokyo 130-8603 (JP); FUJIKI Takashi, Tokyo 130-8603 (JP)
(74) Representative: Hoffmann Eitle
(86) International application number: PCT/JP2021/043809
(87) International publication number: WO 2023/100228

(57) **Abstract**

A suction device (100B) comprises: a body (30) constituting a power supply unit serving as a body unit; and a panel (10) that is detachable with respect to the body (30). The panel (10) comprises a sensor that operates when power is supplied. The power supply unit comprises a power supply part and a power feeding unit that supplies power from the power supply part to the panel (10) that is attached. The power feeding unit supplies power from the power supply part to the panel (10) attached to the power supply unit, by means of contactless power transmission.

## Description

### TECHNICAL FIELD

The present invention relates to an inhalation device including a main body portion and a panel attachable to and detachable from the main body portion.

### BACKGROUND ART

In the related art, for example, an inhalation device capable of inhaling aerosol containing a flavor component is known. In the following Patent Literature 1, a technique is disclosed in which information is transmitted between a sensor device that can be mounted on an electronic vaping device and an external device. Further, the following Patent Literature 2 discloses a technique in which an electronic vaping device transmits predetermined data to an outside using a communication mechanism that is attachable to and detachable from an electronic vaping device.

### CITATION LIST

### PATENT LITERATURE

Patent Literature 1: International Patent Publication No. 2019/129548
Patent Literature 2: International Patent Publication No. 2018/215629

### SUMMARY OF INVENTION

### TECHNICAL PROBLEM

However, in the related art, electric power feeding from a main body portion including a power supply to an external device attachable to and detachable from the main body portion has not been sufficiently studied.

The present invention provides an inhalation device capable of appropriately feeding electric power from a main body portion including a power supply to a panel attachable to and detachable from the main body portion.

### SOLUTION TO PROBLEM

The present invention is an inhalation device including:
a main body portion; and
a panel attachable to and detachable from the main body portion, in which
the panel includes a sensor configured to operate when electric power is fed,
the main body portion includes a power supply and a power feeding unit configured to feed electric power of the power supply to the mounted panel, and
the power feeding unit feeds the electric power of the power supply by non-contact electric power transmission.

### ADVANTAGEOUS EFFECTS OF INVENTION

According to the present invention, it is possible to provide an inhalation device capable of appropriately feeding electric power from a main body portion including a power supply to a panel attachable to and detachable from the main body portion.

### BRIEF DESCRIPTION OF DRAWINGS

FIG. 1A is a schematic diagram schematically illustrating a first configuration example of an inhalation device according to an embodiment.
FIG. 1B is a schematic diagram schematically illustrating a second configuration example of an inhalation device according to an embodiment.
FIG. 2 is a schematic diagram schematically illustrating a configuration example of a panel according to an embodiment.
FIG. 3 is a timing chart illustrating an operation example of the panel according to an embodiment.
FIG. 4 is an overall perspective view of the inhalation device in FIG. 1B.
FIG. 5A is a schematic external view of an example of the panel provided in the inhalation device of FIG. 1B.
FIG. 5B is a schematic external view of an example of a main body housing provided in the inhalation device of FIG. 1B.

### DESCRIPTION OF EMBODIMENTS

Hereinafter, an inhalation device according to an embodiment of the present invention will be described with reference to the drawings. Hereinafter, the same or similar elements are denoted by the same or similar reference numerals, and the description thereof may be appropriately omitted or simplified. In the following description, the inhalation device is a device that generates a substance to be inhaled by the user, and includes, but is not limited to, an electronic cigarette and a nebulizer.

### «1. Configuration Example of Inhalation Device»

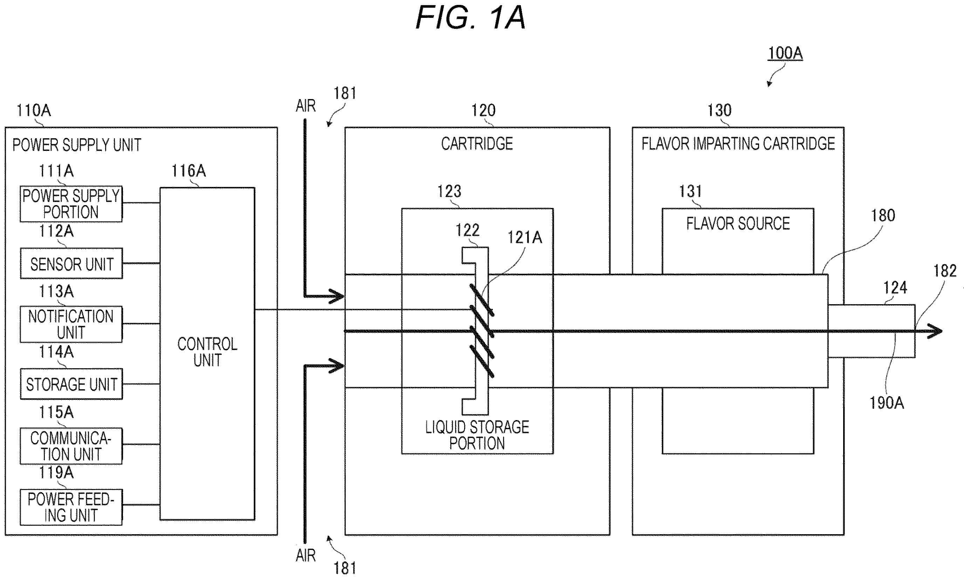

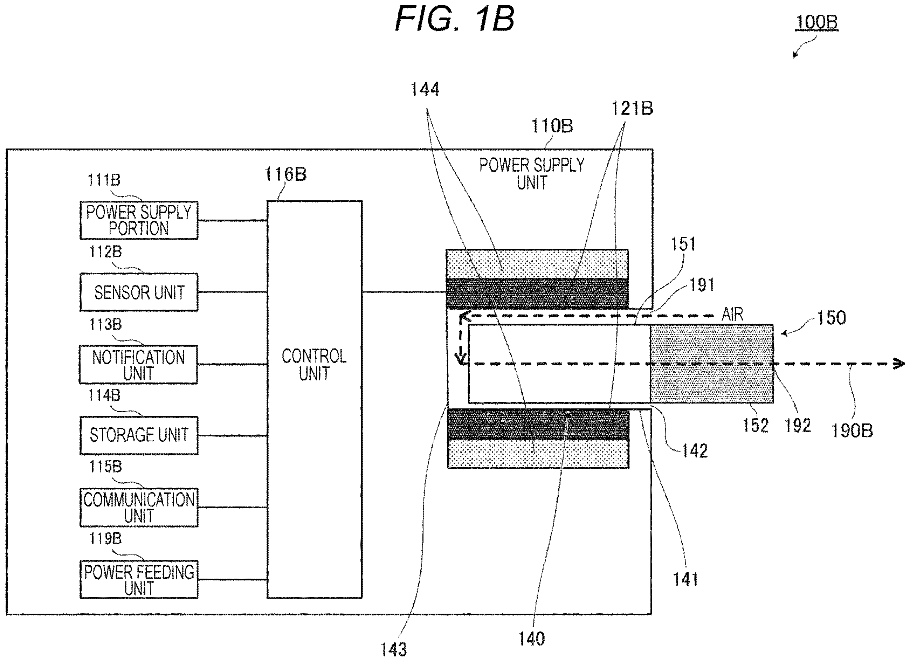

First, an inhalation device 100 (100A, 100B) according to an embodiment will be described with reference to FIGS. 1A and 1B. In the following description, it is assumed that a substance generated by the inhalation device 100 is aerosol and an inhalation component source to be heated is an aerosol source, but the present invention is not limited thereto.

### (11) First Configuration Example

FIG. 1A is a schematic diagram schematically illustrating a first configuration example of the inhalation device. As illustrated in FIG. 1A, the inhalation device 100A according to this configuration example includes a power supply unit 110A, a cartridge 120, and a flavor imparting cartridge 130. The power supply unit 110A may be referred to as a main body portion of the inhalation device 100A, and includes a power supply portion 111A, a sensor unit 112A, a notification unit 113A, a storage unit 114A, a communication unit 115A, a power feeding unit 119A, and a control unit 116A. The cartridge 120 includes a heating portion 121A, a liquid guide portion 122, and a liquid storage portion 123. The flavor imparting cartridge 130 includes a flavor source 131 and a mouthpiece 124. An air flow path 180 is formed in the cartridge 120 and the flavor imparting cartridge 130. The cartridge 120 is attachable to and detachable from the power supply unit 110A, and the flavor imparting cartridge 130 is attachable to and detachable from the cartridge 120. In other words, the cartridge 120 and the flavor imparting cartridge 130 are both replaceable.

The power supply portion 111A stores electric power. The power supply portion 111A feeds the electric power to each component of the inhalation device 100A under control of the control unit 116A. The power supply portion 111A may be implemented by a rechargeable battery such as a lithium-ion secondary battery.

The sensor unit 112A obtains various types of information related to the inhalation device 100A. For example, the sensor unit 112A includes a pressure sensor such as a microphone condenser, a flow rate sensor, a temperature sensor, or the like, and obtains a value associated with inhalation by the user. As another example, the sensor unit 112A is implemented by an input device that receives input of information from the user, such as a button or a switch.

The notification unit 113A notifies the user of the various types of information. The notification unit 113A includes, for example, a light-emitting device (for example, an LED) that emits light, a display device that displays an image, a sound output device that outputs sound, or a vibrating device that vibrates.

The storage unit 114A stores various types of information (for example, data and programs) for operating the inhalation device 100A. The storage unit 114A includes, for example, a nonvolatile storage medium such as a flash memory. For example, the storage unit 114A stores a heating profile of the heating portion 121A. Here, the heating profile is information defining a time-series transition of a target temperature of the heating portion 121A when the heating portion 121A is heated. The storage unit 114A may store data received by the power supply unit 110A from a panel 10 to be described later.

The communication unit 115A is a communication interface capable of performing communication conforming to any wired or wireless communication standard. In the case of wireless communication, for example, Wi-Fi (registered trademark), Bluetooth (registered trademark), or near field communication (NFC) may be adopted as the communication standard. In the case of wired communication, for example, communication may be performed by an external connection terminal such as a universal serial bus (USB) and a data communication cable. For example, the communication unit 115A can input and output data related to the operation of the inhalation device 100A between the power supply unit 110A and an external device.

An example of the external device which is a communication destination of the communication unit 115A (that is, the power supply unit 110A) is the panel 10 to be described later. The communication unit 115A communicates with the panel 10 by, for example, the near field communication. Accordingly, communication between the power supply unit 110A and the panel 10 is enabled with a simple configuration. In this case, the communication unit 115A may include, for example, an NFC reader and writer module and an NFC antenna.

Further, the communication unit 115A may communicate with a terminal device (for example, a smartphone) of the user or a predetermined server device (for example, a server device managed by a manufacturer of the inhalation device 100). For example, the communication unit 115 may perform communication according to different communication standards depending on communication destinations, for example, may communicate with the panel 10 by the near field communication and communicate with the terminal device of the user by Bluetooth (registered trademark). In this way, it is possible to communicate with each communication destination according to an appropriate communication standard, and to efficiently communicate with each communication destination.

The power feeding unit 119A feeds, by non-contact electric power transmission, the electric power of the power supply portion 111A to the external device of the power supply unit 110A under the control of the control unit 116A. An example of the external device to which the electric power is fed by the power feeding unit 119A is the panel 10 to be described later. The power feeding unit 119A feeds the electric power to the panel 10 through electric power transmission by the near field communication, for example. That is, an example of the non-contact electric power transmission is electric power transmission by the near field communication. Accordingly, the electric power can be fed from the power supply unit 110A to the panel 10 with a simple configuration.

As described above, the communication unit 115A is configured to communicate with the panel 10 through the near field communication, and the power feeding unit 119A is configured to supply electric power to the panel 10 through the electric power transmission by the near field communication, so that the communication and electric power transmission between the power supply unit 110A and the panel 10 is efficiently enabled. Accordingly, it is possible to simplify configurations of the power supply unit 110A and the panel 10 compared with a case where the communication and the electric power transmission between the power supply unit 110A and the panel 10 are performed using different mechanisms. More specifically, in this case, the power feeding unit 119A may be implemented by the NFC reader and writer module, the NFC antenna, and the like which are the same as those of the communication unit 115A described above.

The power feeding unit 119A may feed electric power to the panel 10 not only through the electric power transmission by the near field communication but also through non-contact electric power transmission of another method. As the non-contact electric power transmission of another method, various types of non-contact electric power transmission of a non-radiation type such as an electromagnetic induction method, a magnetic field resonance method, or an electric field coupling method, or various types of non-contact electric power transmission of a radiation type such as a radio wave method or a laser method may be adopted. As a specific example of the non-contact electric power transmission of the electromagnetic induction method, Qi (registered trademark) can be used.

Further, the power supply unit 110A and the panel 10 may be coupled via a physical power feeding interface, and the power feeding unit 119A may supply the electric power to the panel 10 via the power feeding interface. Examples of the physical power feeding interface include a pogo pin, a plate spring, and various connectors and cables. Further, the power feeding unit 119A may be configured to supply electric power of the power supply portion 111A to an external device (for example, the terminal device of the user) other than the panel 10. In this way, the power supply unit 110A can be utilized as a so-called "mobile battery", and convenience for the user can be improved.

The control unit 116A functions as an arithmetic processing device and a control device, and controls overall operations in the inhalation device 100A according to various programs. The control unit 116A is implemented by, for example, an electronic circuit such as a central processing unit (CPU) or a microprocessor.

The liquid storage portion 123 stores the aerosol source. The aerosol source is atomized and/or vaporized (hereinafter, also simply referred to as "atomized") to generate aerosol. The aerosol source is, for example, a polyhydric alcohol such as glycerin and propylene glycol, and a liquid such as water. The aerosol source may contain a flavor component derived from tobacco or non-tobacco. When the inhalation device 100A is a medical inhaler such as a nebulizer, the aerosol source may include a drug.

The liquid guide portion 122 guides and holds the aerosol source, which is a liquid stored in the liquid storage portion 123, from the liquid storage portion 123. The liquid guide portion 122 is, for example, a wick formed by twisting a fibrous material such as a glass fiber or a porous material such as a porous ceramic. When the liquid guide portion 122 is a wick, the aerosol source stored in the liquid storage portion 123 is induced by a capillary effect of the wick.

The heating portion 121A heats the aerosol source to atomize the aerosol source to generate the aerosol. In the example illustrated in FIG. 1A, the heating portion 121A is implemented by a coil and wound around the liquid guide portion 122. When the heating portion 121A generates heat, the aerosol source held by the liquid guide portion 122 is heated and atomized, and the aerosol is generated. The heating portion 121A generates heat when fed with the electric power from the power supply portion 111A.

As an example, when the sensor unit 112A detects that the user starts inhaling, that a predetermined user input operation is received, and/or that predetermined information is input, the electric power may be fed to the heating portion 121A. Then, when the sensor unit 112A detects that the user finishes inhaling, that a predetermined user input operation is received, and/or that predetermined information is input, the electric power may be stopped from feeding to the heating portion 121A.

Further, for example, the control unit 116A may set an operation mode of the inhalation device 100A to an inhalation mode, and may set a state in which electric power can be fed to the heating portion 121A in accordance with the inhalation device 100A being powered on in response to a predetermined user input operation. That is, the control unit 116A may allow electric power feeding to the heating portion 121A only when the operation mode of the inhalation device 100A is the inhalation mode. In this case, the aerosol generated by heating the aerosol source is delivered to the user only when the operation mode of the inhalation device 100A is the inhalation mode.

The flavor source 131 is a component for imparting the flavor component to the aerosol. The flavor source 131 may contain the flavor component derived from tobacco or non-tobacco.

The air flow path 180 is a flow path of air inhaled by the user. The air flow path 180 has a tubular structure having an air inflow hole 181 which is an inlet of air into the air flow path 180 and an air outflow hole 182 which is an outlet of air from the air flow path 180 as both ends. In the middle of air flow path 180, the liquid guide portion 122 is disposed on an upstream side (a side close to the air inflow hole 181), and the flavor source 131 is disposed on a downstream side (a side close to the air outflow hole 182). Air flowing in from the air inflow hole 181 in accordance with the inhalation by the user is mixed with the aerosol generated by the heating portion 121A, passes through the flavor source 131, and is transported to the air outflow hole 182 as indicated by an arrow 190A. When a mixed fluid of the aerosol and the air passes through the flavor source 131, the flavor component contained in the flavor source 131 is imparted to the aerosol.

The mouthpiece 124 is a member that can be held by the user in his/her mouth during the inhalation. The air outflow hole 182 is disposed in the mouthpiece 124. The user can take in the mixed fluid of the aerosol and the air into an oral cavity by holding the mouthpiece 124 in the mouth and inhaling the mouthpiece 124.

The configuration example of the inhalation device 100A has been described above. It is needless to say that the configuration of the inhalation device 100A is not limited to the above, and may adopt various configurations as exemplified below.

As an example, the inhalation device 100A may not include the flavor imparting cartridge 130. In this case, the cartridge 120 is provided with the mouthpiece 124.

As another example, the inhalation device 100A may include a plurality of types of aerosol sources. A plurality of types of aerosol generated from the plurality of types of aerosol sources may be mixed in the air flow path 180 to cause a chemical reaction, thereby generating another type of aerosol.

A method for atomizing the aerosol source is not limited to heating by the heating portion 121A. For example, the method for atomizing the aerosol source may be vibratory atomization or induction heating.

### (1.2) Second Configuration Example

FIG. 1B is a schematic diagram schematically illustrating a second configuration example of the inhalation device. In the inhalation device 100B, for example, a stick-type substrate 150 having a flavor generating substrate such as a filler containing an aerosol source and a flavor source which are inhalation component sources is inserted. In this configuration example, the aerosol source is not limited to a liquid, and may be a solid. The inserted stick-type substrate 150 generates aerosol containing a flavor component by being heated from an outer periphery thereof.

As illustrated in FIG. 1B, the inhalation device 100B according to this configuration example includes a power supply unit 110B. The power supply unit 110B can be referred to as a main body portion of the inhalation device 100B, and includes a power supply portion 111B, a sensor unit 112B, a notification unit 113B, a storage unit 114B, a communication unit 115B, a power feeding unit 119B, a control unit 116B, a heating portion 121B, a holding portion 140, and a heat insulation portion 144.

The power supply portion 111B, the sensor unit 112B, the notification unit 113B, the storage unit 114B, the communication unit 115B, the power feeding unit 119B, and the control unit 116B are substantially the same as the corresponding components provided in the inhalation device 100A according to the first configuration example.

The holding portion 140 has an internal space 141, and holds the stick-type substrate 150 while accommodating a part of the stick-type substrate 150 in the internal space 141. The holding portion 140 has an opening 142 through which the internal space 141 communicates with the outside, and holds the stick-type substrate 150 inserted into the internal space 141 from the opening 142. For example, the holding portion 140 is a cylindrical body having the opening 142 and a bottom portion 143 as a bottom surface, and defines the columnar internal space 141. In the present specification, a direction in which the stick-type substrate 150 is inserted into a substrate portion 151 is defined as a longitudinal direction of the inhalation device 100B.

The holding portion 140 includes a shutter (not illustrated) that opens and closes the opening 142. More specifically, the shutter includes a slide mechanism and is movable along a surface of an outer shell between a first position where the opening 142 is closed and a second position where the opening 142 is opened. The stick-type substrate 150 is inserted into the substrate portion 151 through the opening 142 in a state where the opening 142 is opened, and is received in the internal space 141. Opening and closing of the opening 142 can be detected by the sensor unit 112B by providing a sensor (not illustrated) in the vicinity of the first position and/or the second position. For example, a magnet is disposed in the shutter, and the opening and closing of the opening 142 is detected by a magnetic sensor.

The communication unit 113B may activate a communication function in response to the opening of the opening 142 of the shutter and start communication with an external device (for example, the panel 10). Alternatively, the communication with the external device in communication may be ended in response to the closing of the opening 142 of the shutter. In this way, communication with the external device (for example, the panel 10) can be performed in an inhalation period in which the aerosol is inhaled by the user.

In the holding portion 140, a pressing portion and a non-pressing portion (both not illustrated) are formed on an inner wall of the internal space 141 along the longitudinal direction. When the internal space 141 receives the stick-type substrate 150, the pressing portion presses the stick-type substrate 150 in a direction perpendicular to the longitudinal direction. The stick-type substrate 150 is sandwiched by the holding portion 140 while being pressed and deformed by the pressing portion. As a result, the stick-type substrate 150 is heated from the outer periphery thereof by the heating portion 121B while being pressed.

On the other hand, a gap (not illustrated) is formed between the non-pressing portion and the stick-type substrate 150. Accordingly, the opening 142 and the bottom portion 143 communicate with each other through the gap.

The holding portion 140 also has a function of defining a flow path of air fed to the stick-type substrate 150. An air inflow hole 191 which is an inlet of air to the flow path is the opening 142. More precisely, the air inflow hole 191 is a gap between the non-pressing portion and the stick-type substrate 150. Air flowing in from the air inflow hole 191 in accordance with the inhalation by the user is transported to an air outflow hole 192 which is an outlet of air from the flow path through the stick-type substrate 150 along an arrow 190B indicated by a dotted line.

The stick-type substrate 150 includes a substrate portion 151 and an inhalation port portion 152. The substrate portion 151 includes the aerosol source. In a state in which the stick-type substrate 150 is held by the holding portion 140, at least a part of the substrate portion 151 is accommodated in the internal space 141, and at least a part of the inhalation port portion 152 protrudes from the opening 142. Then, when the user holds the intake portion 152 protruding from the opening 142 in the mouth and inhales, the air flows into the internal space 141 from the air inflow hole 191, is transported to the air outflow hole 192 of the inhalation port portion 152 via the bottom portion 143 along the arrow 190B indicated by the dotted line, and reaches an oral cavity of the user together with the aerosol generated from the substrate portion 151.

The heating portion 121B has a configuration similar to that of the heating portion 121A according to the first configuration example. However, in the example illustrated in FIG. 1B, the heating portion 121B is formed in a film shape and disposed to cover an outer periphery of the holding portion 140. Then, when the heating portion 121B generates heat, the substrate portion 151 of the stick-type substrate 150 is heated from the outer periphery thereof, and the aerosol is generated.

The heat insulation portion 144 prevents heat transfer from the heating portion 121B to other components. For example, the heat insulation portion 144 is made of a vacuum heat insulating material or an aerogel heat insulating material.

The configuration example of the inhalation device 100B has been described above. It is needless to say that the configuration of the inhalation device 100B is not limited to the above, and may adopt various configurations as exemplified below.

As an example, the heating portion 121B may be formed in a blade shape and disposed to protrude from the bottom portion 143 of the holding portion 140 into the internal space 141. In this case, the blade-shaped heating portion 121B is inserted into the substrate portion 151 of the stick-type substrate 150, and heats the substrate portion 151 of the stick-type substrate 150 from the inside. As another example, the heating portion 121B may be disposed to cover the bottom portion 143 of the holding portion 140. Further, the heating portion 121B may be implemented by a combination of two or more of a first heating portion covering an outer periphery of the holding portion 140, a blade-shaped second heating portion, and a third heating portion covering the bottom portion 143 of the holding portion 140.

The method for atomizing the aerosol source is not limited to heating by the heating portion 121B. For example, the method for atomizing the aerosol source may be induction heating.

The inhalation device 100B may further include the heating portion 121A, the liquid guide portion 122, the liquid storage portion 123, and the air flow path 180 according to the first configuration example, and the air outflow hole 182 of the air flow path 180 may also serve as the air inflow hole to the internal space 141. In this case, the mixed fluid of the aerosol and the air generated by the heating portion 121A flows into the internal space 141, is further mixed with the aerosol generated by the heating portion 121B, and reaches the oral cavity of the user

### «2. Configuration Example of Panel»

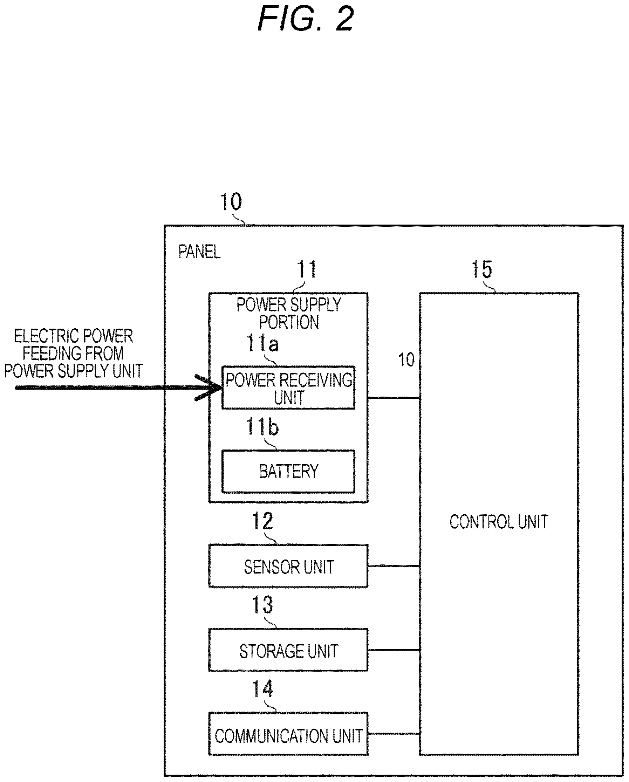

Next, the panel 10 provided in the inhalation device 100 (100A, 100B) according to an embodiment will be described with reference to FIG. 2. Here, the panel 10 mainly includes a member forming at least a part of the outermost housing of the inhalation device 100. That is, the panel 10 is, for example, a lid (cover) of the inhalation device 100. The panel 10 is configured to be attachable to and detachable from the power supply unit 110 (110A, 110B) which is a main body portion of the inhalation device 100. In other words, the panel 10 is replaceable.

By making the panel 10 replaceable, for example, it is possible to change an appearance of the inhalation device 100 through the replacement of the panel 10, and to change the function of the inhalation device 100 implemented by using the panel 10. Therefore, the user can customize the appearance and function of the inhalation device 100 in accordance with, for example, his/her preference. Accordingly, merchantability of the inhalation device 100 can be improved.

FIG. 2 is a schematic diagram schematically illustrating a configuration example of the panel. As illustrated in FIG. 2, the panel 10 includes a power supply portion 11, the sensor unit 12, a storage unit 13, a communication unit 14, and a control unit 15.

The power supply portion 11 feeds electric power to each component of the panel 10 under the control of the control unit 15. More specifically, the power supply portion 11 includes a power receiving unit 11a. The power receiving unit 11a receives the electric power fed from the power supply unit 110 to the panel 10 (in other words, the electric power fed from the power feeding units 119A, 119B to the panel 10). The power supply portion 11 feeds the electric power received by the power receiving unit 11a to each component of the panel 10. Accordingly, each component of the panel 10 including the sensor unit 12 can be operated by the electric power fed from the power supply unit 110 to the panel 10.

As described above, the power supply unit 110 (power feeding units 119A, 119B) may supply the electric power to the panel 10 by the non-contact electric power transmission such as the near field communication. When the power supply unit 110 feeds the electric power to the panel 10 by the near field communication, the power receiving unit 11a may include, for example, the NFC reader and writer module and the NFC antenna.

The power supply portion 11 further includes, for example, a battery 11b that stores the electric power, and is configured to supply the electric power of the battery 1 1b to each component of the panel 10. The battery 11b is, for example, a rechargeable battery such as a lithium-ion secondary battery, and is charged with the electric power fed from the power supply unit 110 to the panel 10. As described above, by providing the battery 11b in the panel 10, even if the electric power feeding from the power supply unit 110 to the panel 10 becomes unstable due to some factors, stable electric power can be fed from the battery 1 1b to each component of the panel 10, and thus the operation can be stabilized.

Further, when the electric power is fed from the power supply unit 110 to the panel 10 by the non-contact electric power transmission such as the near field communication, an upper limit value of the electric power that can be fed to the panel 10 per unit time may be small to a certain extent. Thus, the components that can be mounted on the panel 10 (for example, the sensor of the sensor unit 12) can be limited to those with low electric power consumption. In this regard, if the battery 1 1b is provided in the panel 10, it is possible to provide, in the panel 10, a component that consumes more electric power than the electric power that can be fed from the power supply unit 110 to the panel 10 in real time, and it is possible to improve a degree of freedom of components that can be mounted on the panel 10.

It should be noted that the battery 11b is preferably a rechargeable battery formed in a film shape. By making the battery 11b thin, it is possible to provide the battery 1 1b in the panel 10 while suppressing an increase in the thickness of the panel 10 (that is, an increase in the size of the inhalation device 100).

The sensor unit 12 includes a sensor (hereinafter, also referred to as a "sensor 12a") that operates by being fed with electric power to perform sensing. The output of the sensor 12a is input to the control unit 15, and is used by the control unit 15 to obtain information related to the user, for example. In other words, the sensor 12a is, for example, a sensor for obtaining information related to the user

Here, the information related to the user may be biological information of the user (for example, information indicating a body temperature, a pulse rate, a perspiration amount, or a content of predetermined hemoglobin in blood), or information indicating an operation state of the user (for example, whether the user is touching the sensor 12a or holding the inhalation device 100). Hereinafter, data obtained by sensing of the sensor 12a is also referred to as "sensing data". The sensing data is, for example, data including the information related to the user

As the sensor 12a, for example, an optical sensor including a light emitting element (in other words, a light source, for example, an LED) and a light receiving element (for example, a photodiode) can be adopted. In this case, the light emitting element of the sensor 12a irradiates a human body (for example, a hand holding the inhalation device 100) of the user with light. The light receiving element of the sensor 12a receives the light emitted from the light emitting element of the sensor 12a through the human body of the user. The light received by the light receiving element may be reflected light from the human body, scattered light from the human body (for example, light scattered and reflected in the human body), or transmitted light transmitted through the human body.

By providing the sensor 12a as such an optical sensor, the control unit 15 can obtain information related to the user including information indicating whether, for example, the user is touching the sensor 12a (or holding the inhalation device 100) based on the light (for example, an intensity thereof) received by the light receiving element of the sensor 12a. Further, the control unit 15 can detect, for example, the content of predetermined hemoglobin in the blood of the user based on the light (for example, a wavelength thereof) received by the light receiving element of the sensor 12a, and obtain information related to the user including information indicating a detection result.

The sensor 12a may be an air pressure sensor capable of detecting an outside air pressure (for example, atmospheric pressure) of the inhalation device 100, an air temperature sensor capable of detecting an outside air temperature (for example, room temperature) of the inhalation device 100, an acceleration sensor capable of detecting an acceleration generated in the inhalation device 100, a pressure sensor capable of detecting a pressure applied to the inhalation device 100 from the outside, or the like. As another example, the sensor 12a may be a touch sensor capable of detecting contact of the user with the inhalation device 100, a distance sensor capable of detecting a distance between the inhalation device 100 and an object, a color sensor capable of detecting a color of the object, a proximity sensor capable of detecting proximity of the object to the inhalation device 100, an orientation sensor capable of detecting north as a direction, a biometric authentication sensor capable of recognizing a fingerprint, an iris, or the like of the user, a global positioning system (GPS) sensor capable of specifying a current position of the user (for example, a current position of the inhalation device 100), or the like.

As described above, when the panel 10 is provided with the battery 11b, the sensor unit 12 may further include a battery sensor. Here, the battery sensor is a sensor different from the above-described sensor 12a, and is, for example, a sensor that detects an output voltage or an input and output current of the battery 11b.

By providing such a battery sensor, the control unit 15 can obtain charging data related to charging of the battery 11b based on a detection result of the battery sensor when the battery 1 1b is being charged. Here, the charging data is, for example, data including information indicating an output voltage, an input and output current, or a state of charge (SOC) of the battery 1 1b. The battery 11b can be appropriately charged by the control unit 15 controlling the charging of the battery 11b based on such charging data.

For example, the type of the sensor provided in the sensor unit 12 may be different for each type of the panel 10. A function corresponding to the sensor provided in the sensor unit 12 of the panel 10 mounted on the power supply unit 110 may be provided for the user. In this way, the user can change the function provided by the inhalation device 100 through the replacement of the panel 10, and customize the inhalation device 100 such that a function suitable for his/her preference is provided. Accordingly, the convenience and merchantability of the inhalation device 100 are improved.

The storage unit 13 stores various types of information related to the panel 10. The storage unit 13 is implemented by, for example, a nonvolatile storage medium such as a flash memory. As an example, the storage unit 13 stores the above-described sensing data.

The communication unit 14 is a communication interface that performs communication with the power supply unit 110 (the communication unit 115A or the communication unit 115B) under the control of the control unit 15. The communication unit 14 communicates with the power supply unit 110 by, for example, the near field communication. As described above, communication and electric power transmission between the power supply unit 110 and the panel 10 is efficiently enabled and configurations of the power supply unit 110 and the panel 10 can be simplified by performing the electric power feeding from the power supply unit 110 to the panel 10 by the near field communication and the communication unit 14 communicating with the power supply unit 110 by the near field communication. In a case where the electric power feeding from the power supply unit 110 to the panel 10 is performed by the near field communication and the communication unit 14 communicates with the power supply unit 110 by the near field communication, the communication unit 14 can be implemented by the same NFC reader and writer module and NFC antenna as the power receiving unit 11a.

The communication between the communication unit 14 and the power supply unit 110 may be performed using, for example, Wi-Fi (registered trademark) or Bluetooth (registered trademark) without being limited to the near field communication. As described above, when the power supply unit 110 and the panel 10 are coupled via a physical power feeding interface, the communication unit 14 may communicate with the power supply unit 110 via the power feeding interface.

The control unit 15 functions as an arithmetic processing device and a control device, and controls overall operations in the panel 10 according to various programs. The control unit 15 is implemented by, for example, an electronic circuit such as a central processing unit (CPU) or a microprocessor.

### «3. Operation Example of Panel»

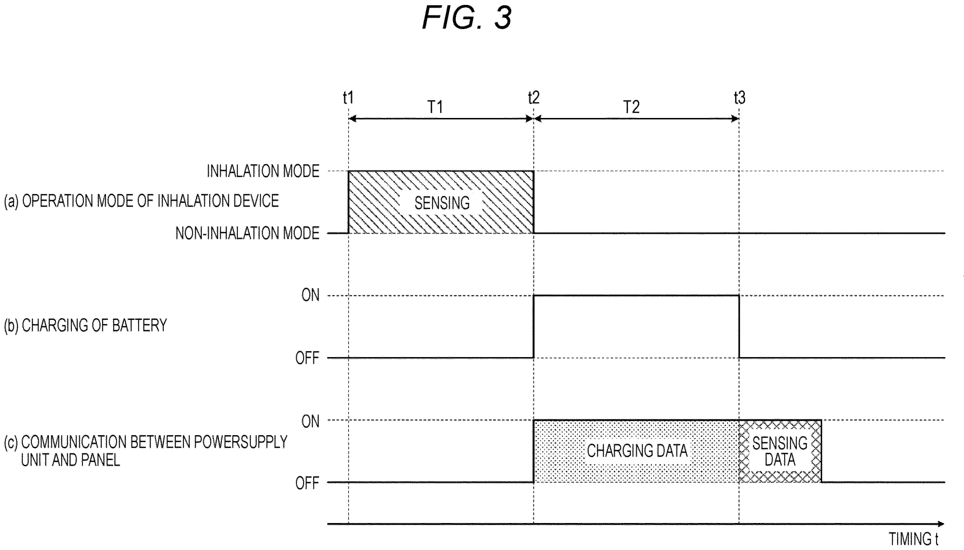

Next, an operation example of the panel 10 will be described with reference to FIG. 3. FIG. 3 is a timing chart illustrating an operation example of the panel, and illustrates a timing relationship among (a) an operation mode of the inhalation device 100, (b) charging of the battery 11b by the electric power fed from the power supply unit 110, and (c) communication performed between the power supply unit 110 and the panel 10. In the following description of FIG. 3, it is assumed that the panel 10 is mounted on the power supply unit 110.

At timing t1 illustrated in FIG. 3, when a predetermined user input operation is performed and the inhalation device 100 is powered on, the control unit 116 (116A, 116B) of the power supply unit 110 set the operation mode of the inhalation device 100 to the inhalation mode. When the operation mode of the inhalation device 100 is the inhalation mode, the control unit 116 of the power supply unit 110 causes the heating portion 121 (121, 121B) to heat the aerosol source to generate the aerosol. In other words, the period in which the operation mode of the inhalation device 100 is the inhalation mode is an inhalation period in which the aerosol is inhaled by the user.

After timing t1, at timing t2 when a predetermined number of times (for example, 15 times) of inhalation is performed or a predetermined time (for example, 5 minutes) has elapsed, the control unit 116 of the power supply unit 110 ends the inhalation mode and sets the operation mode of the inhalation device 100 to another mode (non-inhalation mode).

When the operation mode of the inhalation device 100 is set to the inhalation mode, the control unit 116 of the power supply unit 110 notifies the control unit 15 of the panel 10 of the fact that the inhalation mode is set by the communication unit 115 (115A, 115B). Similarly, when the inhalation mode ends, the control unit 116 causes the communication unit 115 to notify the control unit 15 of the end of the inhalation mode. Accordingly, the control unit 15 of the panel 10 can recognize the period in which the operation mode of the inhalation device 100 is the inhalation mode.

Then, the control unit 15 of the panel 10 causes the sensor unit 12 (for example, the sensor 12a) of the panel 10 to perform sensing (see "sensing" in FIG. 3) in a period (that is, the inhalation period) in which the operation mode of the inhalation device 100 is the inhalation mode. More specifically, when the operation mode of the inhalation device 100 is the inhalation mode, the control unit 15 causes the sensor unit 12 to perform sensing by feeding electric power to the sensor unit 12 from the power supply portion 11 of the panel 10. At this time, the electric power fed to the sensor unit 12 may be electric power received by the power receiving unit 11a from the power supply unit 110 in real time or electric power of the battery 11b. Detection results (for example, the output of the sensor 12a) by the sensing are sequentially sent to the control unit 15 of the panel 10, for example.

Then, based on the detection results of the sensor unit 12, the control unit 15 obtains, for example, information related to the user in each period in which the operation mode of the inhalation device 100 is the inhalation mode (in the example described here, a period T1 from timing t1 to timing t2), and stores the information in the storage unit 13 of the panel 10. Accordingly, the storage unit 13 stores the sensing data including information related to the user in the period (that is, the inhalation period) in which the operation mode of the inhalation device 100 is the inhalation mode.

When the inhalation mode ends, the control unit 15 starts charging the battery 11b with the electric power fed from the power supply unit 110. For example, the control unit 15 charges the battery 11b in a period T2 from timing t2 at which the inhalation mode ends to timing t3 at which the battery 11b is fully charged. While the battery 11b is being charged, the control unit 15 transmits the above-described charging data to the communication unit 115 of the power supply unit 110 from the communication unit 14 (see "charging data" in FIG. 3). The charging data transmitted from the communication unit 14 is received by the communication unit 115 and obtained by the control unit 116 of the power supply unit 110. Accordingly, the control unit 116 can feed appropriate electric power to the panel 10 by the power feeding unit 119 (119A, 119B) according to the state of charge of the battery 11b. Accordingly, the battery 11b can be appropriately charged.

The control unit 15 of the panel 10 may cause the communication unit 14 to notify the control unit 116 of the power supply unit 110 of the start of the charging of the battery 11b when the charging of the battery 1 1b is started. Similarly, when the charging of the battery 1 1b is completed, the control unit 15 may cause the communication unit 14 to notify the control unit 116 of the completion of the charging of the battery 11b. Accordingly, the control unit 116 of the power supply unit 110 can recognize the state of charge of the battery 11b.

When the charging of the battery 11b is completed, the control unit 15 of the panel 10 causes the communication unit 14 to transmit the sensing data stored in the storage unit 13 to the communication unit 115 of the power supply unit 110 (see "sensing data" in FIG. 3). The sensing data transmitted from the communication unit 14 is received by the communication unit 115 and obtained by the control unit 116 of the power supply unit 110. Accordingly, for example, as described above, when the sensing data includes information related to the user in the period (that is, the inhalation period) in which the operation mode of the inhalation device 100 is the inhalation mode, the control unit 116 can obtain the information. Further, by transmitting the sensing data after the charging of the battery 1 1b is completed, the battery 11b can be charged more quickly than in a case where the battery 11b is charged after the sensing data is transmitted.

The control unit 116 of the power supply unit 110 controls an operation of the inhalation device 100 based on the obtained sensing data, for example. As an example, the control unit 116 may cause the notification unit 113 (113A, 113B) to notify the user of information represented by the obtained sensing data. As another example, the control unit 116 may change the heating profile when the heating portion 121 (121A, 121B) is heated thereafter based on the obtained sensing data. The control unit 116 may store the obtained sensing data in the storage unit 114(114A, 114B) of the power supply unit 110. Then, the control unit 116 may transmit the sensing data stored in the storage unit 114 to the external device at a predetermined timing.

For example, when the transmission of the sensing data stored in the storage unit 13 of the panel 10 is completed, the control unit 15 of the panel 10 deletes the sensing data from the storage unit 13. Accordingly, it is possible to avoid the sensing data transmitted to the power supply unit 110 from pressing the storage region of the storage unit 13, and to effectively use the limited storage region of the storage unit 13.

For example, in a period in which the battery 11b is charged, sensing by the sensor unit 12 is not performed, and the sensing data is also not transmitted to the power supply unit 110. In other words, the sensing data can be transmitted to the power supply unit 110 when the battery is not charged. The sensing data is transmitted to the power supply unit 110, for example, after the inhalation period ends and when the battery 11b is not charged (specifically, after the charging of the battery 11b is completed). Accordingly, it is possible to transmit the sensing data to the power supply unit 110 while appropriately charging the battery 11b.

In the example described here, sensing is performed by the sensor unit 12 of the panel 10 in the period in which the operation mode of the inhalation device 100 is the inhalation mode (that is, the inhalation period), but the present invention is not limited thereto. For example, the sensor unit 12 (sensor 12a) may perform sensing when the user is touching the sensor 12a. In this case, the sensing data includes information related to a user when the user is touching the sensor 12a. By transmitting such sensing data to the power supply unit 110, the power supply unit 110 can obtain the sensing data including the information related to the user when the user is touching the sensor. Further, the sensor unit 12 (sensor 12a) may perform sensing when the operation mode of the inhalation device 100 is the inhalation mode (that is, the inhalation period) and the user is touching the sensor 12a.

Further, sensing may be performed by the sensor unit 12 also in a period in which the operation mode of the inhalation device 100 is not the inhalation mode. As an example, in a case where the sensor unit 12 includes the biometric authentication sensor, it is conceivable to implement, in the inhalation device 100, a child lock function of restricting the use of the inhalation device 100 by a person (for example, a child of the user) other than a pre-registered user by using the biometric authentication sensor. In this case, sensing by the biometric authentication sensor may be performed also in a period other than the inhalation mode. That is, when the sensor unit 12 includes a plurality of a plurality of sensors, timings at which the sensors perform sensing may be different from each other in consideration of functions and the like of the sensors, for example, in addition to the sensor that performs sensing only in the inhalation mode, a sensor that constantly performs sensing may be provided.

### «4. Appearance Configuration Example of Inhalation Device»

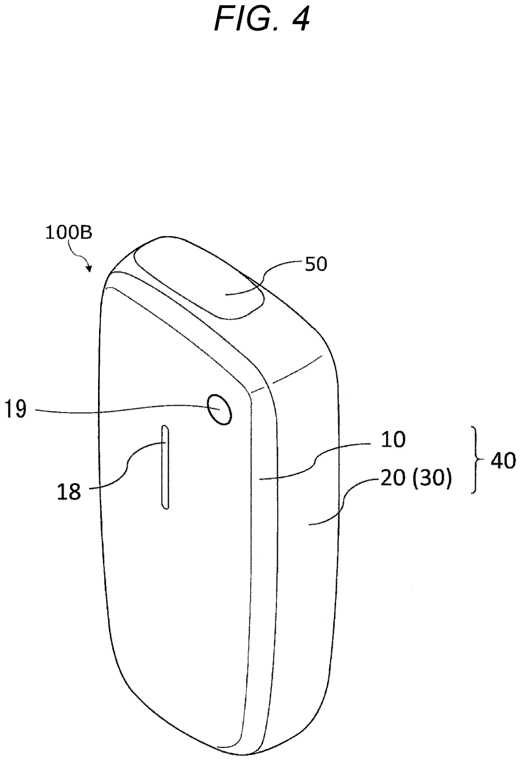

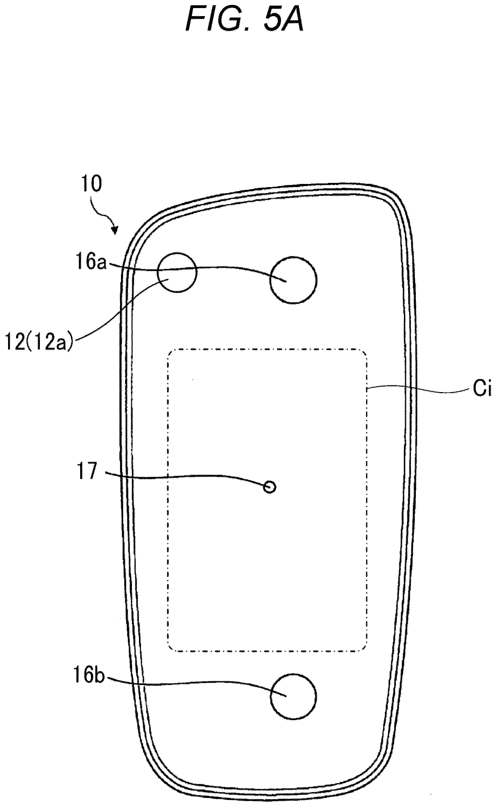

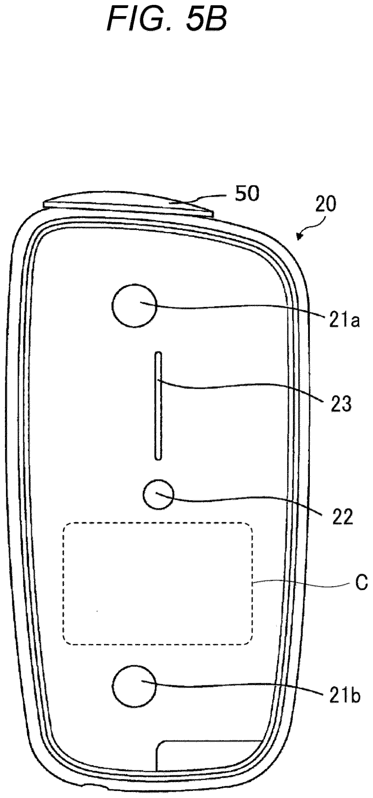

Next, a specific appearance configuration example of the inhalation device 100 according to an embodiment will be described with reference to FIGS. 4, 5A, and 5B. Hereinafter, the inhalation device 100B according to the second configuration example illustrated in FIG. 1B will be described, but the invention is not limited thereto, and the same applies to the inhalation device 100A in FIG. 1A.

FIG. 4 is an overall perspective view of the inhalation device 100B. The inhalation device 100B includes a panel 10, a main body housing 20 to which and from which the panel 10 is attachable and detachable, and a shutter 50. The panel 10 and the main body housing 20 are formed as separate members. The panel 10 includes, on a surface (outer surface) thereof, a display unit 18 made of a transparent material and a sensing region 19 to be sensed by the sensor unit 12. When the sensor 12a of the sensor unit 12 is an optical sensor, the sensing region 19 is also made of a transparent material similarly to the display unit 18. the main body housing 20 accommodates a main body 30 of the inhalation device 100B. Components of the inhalation device 100B illustrated in FIG. 1B are accommodated in the main body 30. That is, the power supply unit 110B described above may include, for example, the main body housing 20 and the main body 30.

The panel 10 is attached to the main body housing 20 to form the outermost housing 40 of the inhalation device 100B. For example, fashionability of the inhalation device 100B can be improved by attaching the panel 10 having a design suitable for the preference of the user. Further, since the inhalation device 100B includes the panel 10, when the main body 30 generates heat, the heat released to the outside can be buffered. That is, the panel 10 functions to insulate heat generated from the heating portion 121B. Further, the panel 10 is formed such that the surface thereof is a substantially curved surface. When attached to the main body housing 20, the panel 10 defines an internal space together with a surface of the main body housing 20.

The housing 40 is preferably sized to be held in a hand of the user. The user holds the inhalation device 100B with one hand while bringing a fingertip into contact with the surface of the panel 10. Further, when the user presses the surface of the panel 10 with the fingertip, the panel 10 is deformed to form a recess toward the main body housing 20. As a result of such deformation of the panel 10, a protrusion provided on the inner surface of the panel 10 comes into contact with an operation button provided on the surface of the main body housing 20, and the operation button is pressed (to be described later).

FIG. 4 illustrates that the shutter 50 closes the opening 142. The opening 142 is opened when the user slides the shutter 50 along a side surface with a finger. As a result of opening the opening 142, the user can insert the stick-type substrate 150. After inserting the stick-type substrate 150, the user can turn on the power supply of the inhalation device 100B by pressing the operation button by pressing the surface of the panel 10 with the finger.

### (4.1) Appearance Configuration Example of Panel

FIG. 5A is an external view of the inner surface of the panel 10. FIG. 5B is an external view of an outer surface of the main body housing 20. In a state in which the panel 10 is attached to the main body housing 20, the inner surface of the panel 10 illustrated in FIG. 5A and the outer surface of the main body housing 20 illustrated in FIG. 5B face each other.

As illustrated in FIG. 5A, a magnet 16a, a magnet 16b, and a protrusion 17 are provided on the inner surface of the panel 10. The magnet 16a and the magnet 16b attract the panel 10 to the main body housing 20 by magnetic force (magnetic attraction). Accordingly, the panel 10 is held by the main body housing 20. As described above, when the panel 10 is deformed to be recessed toward the main body housing 20, the protrusion 17 presses the operation button 22 (see FIG. 5B) provided on the surface of the main body housing 20.

The sensor 12a of the sensor unit 12 and a panel circuit unit Ci are further provided on the inner surface of the panel 10. The sensor 12a is provided on the inner surface of the panel 10 at a position corresponding to the sensing region 19. When the sensor 12a is an optical sensor, the light emitting element and the light receiving element of the sensor 12a are provided on the inner surface of the panel 10 in a state of facing a sensing region 19 side. The sensor 12a is coupled to the panel circuit unit Ci by, for example, flexible printed circuits (FPC) (not illustrated).

The panel circuit unit Ci is an electronic circuit provided with various electronic components that implement the power supply portion 11, the sensor unit 12, the storage unit 13, the communication unit 14, and the control unit 15 described above. In a state in which the panel 10 is attached to the main body housing 20, a portion on which an electronic component (for example, an NFC antenna) constituting the power receiving unit 11a of the panel circuit unit Ci is mounted faces a power feeding region C (see FIG. 5B) formed on the outer surface of the main body housing 20.

### (4.2) Appearance Configuration Example of Main Body Housing 20

As illustrated in FIG. 5B, a magnet 21a, a magnet 21b, an operation button 22, and a display window 23 are provided on the outer surface of the main body housing 20. The magnet 21a, the magnet 21b, and the operation button 22 of the main body housing 20 correspond to the magnet 16a, the magnet 16b, and the protrusion 17 of the panel 10, respectively. That is, the panel 10 is aligned with and faces the main body housing 20 when attached to the main body housing 20.

The magnet 21a and the magnet 21b are attracted to the magnet 16a and the magnet 16b of the panel 10 by the magnetic force (magnetic attraction), respectively. That is, the panel 10 is attached to the main body housing 20 by the magnet 16a and the magnet 21a and the magnet 16b and the magnet 21b attracting each other. The magnet 16a and the magnet 16b of the panel 10, and the magnet 21a and the magnet 21b of the main body housing 20 are preferably made of permanent magnets.

The operation button 22 is provided on the surface to which the panel 10 is attached. That is, the operation button 22 is covered with the panel 10 when the panel 10 is attached to the main body housing 20. As described above, the user can turn on the power supply of the inhalation device 100 by pressing the operation button 22 via the protrusion 17 of the panel 10 by recessing the panel 10 toward the main body housing 20.

The display window 23 is an opening aligned with one or more LEDs disposed in the main body 30, and transmits light from the LEDs to the display unit 18 of the panel 10. Accordingly, the user can visually recognize the light from the outer surface of the panel 10. The LED is implemented by the notification unit 113B and issues predetermined notification. For example, the LED issues notification of operation information of the inhalation device 100B in a predetermined light emitting mode. Specifically, the LED emits light to present, to the user, a state indicating whether the inhalation device 100B is powered on, a progress state of preheating, an inhalation state (a remaining inhalable time, and the like), an operation mode (for example, the inhalation mode) in which the inhalation device 100B is currently in.

Further, an electronic component (for example, an NFC antenna) that implements the power feeding unit 119 is provided inside the main body housing 20, and the power feeding region C is formed on the outer surface of the main body housing 20 by the electronic component. The power feeding region C may also serve as a communication region in which the communication unit 115 can perform communication.

Although detailed description is omitted, for example, a sensor or the like for detecting attachment of the panel 10 to the main body housing 20 may be provided on the outer surface of the main body housing 20.

As described above, according to the inhalation device 100 of an embodiment, the electric power of the power supply portion 111 is fed from the power supply unit 110 including the power supply portion 111 to the panel 10 that is attachable to and detachable from the power supply unit 110 by the non-contact electric power transmission. Accordingly, even when the panel 10 is attached or detached, it is possible to appropriately feed electric power to the panel 10 that is attachable to and detachable from the power supply unit 110 without requiring complicated work of reconnecting the wiring for feeding electric power from the power supply unit 110 to the panel.

Although the embodiments of the present invention have been described above with reference to the accompanying drawings, it is needless to say that the present invention is not limited to such an embodiment. It is apparent to a person skilled in the art that various changes and modifications may be conceived within the scope described in the claims, and it is understood that the changes and the modifications naturally fall within the technical scope of the present invention. In addition, the constituent components described in the above embodiments may be optionally combined without departing from the spirit of the invention.

For example, in the above-described embodiment, the battery 11b is a secondary battery, but the battery 11b may be a primary battery.

In the present specification, at least the following matters are described. In parentheses, corresponding components and the like in the above-described embodiments are illustrated as an example, and the present invention is not limited thereto.
(1) An inhalation device (inhalation devices 100A, 100B) including:
   a main body portion (power supply units 110A, 110B); and
   a panel (a panel 10) attachable to and detachable from the main body portion, in which the panel includes a sensor (a sensor unit 12, a sensor 12a) configured to operate when electric power is fed,
   the main body portion includes a power supply (power supply portions 111A, 111B) and a power feeding unit (power feeding units 119A, 119B) configured to feed electric power of the power supply to the mounted panel, and
   the power feeding unit feeds the electric power of the power supply by non-contact electric power transmission.
   According to (1), the electric power of the power supply is fed from the main body portion including the power supply to the panel attachable to and detachable from the main body portion by the non-contact electric power transmission. Accordingly, even when the panel is attached or detached, it is possible to appropriately supply the electric power to the panel which is attachable to or detachable from the main body portion without requiring a complicated work of reconnecting wiring for feeding electric power from the main body portion to the panel.
(2) The inhalation device according (1), in which
   the panel further includes a battery (a battery 11b) chargeable by the electric power fed by the power feeding unit and configured to feed electric power to the sensor.
   According to (2), when the electric power is fed from the main body portion to the panel by the non-contact electric power transmission, an upper limit value of the electric power that can be fed to the panel per unit time may be reduced to a certain extent. Thus, a sensor that can be mounted on the panel may be limited to a sensor with low electric power consumption. According to (2), since the panel includes the battery capable of feeding the electric power to the sensor, it is possible to provide the panel with the sensor that consumes more electric power than electric power that can be fed in real time from the main body portion to the panel, and it is possible to improve a degree of freedom of the sensor that can be mounted on the panel. In addition, even if the electric power feeding from the main body portion to the panel becomes unstable due to some factors, since stable electric power can be fed from the battery to the sensor, the operation of the sensor can be stabilized.
(3) The inhalation device according to (1) or (2), in which
   the non-contact electric power transmission is electric power transmission by near field communication.
   According to (3), the electric power can be fed from the main body portion to the panel with a simple configuration.
(4) The inhalation device according to (3), in which
   the panel further includes a first communication unit (a communication unit 14),
   the main body portion further includes a second communication unit (communication units 115A, 115B), and
   the first communication unit and the second communication unit communicate with each other through the near field communication.
      According to (4), communication and electric power transmission between the main body portion and the panel can be efficiently enabled, and configurations of the main body portion and the panel can be simplified compared with a case where the communication and the electric power transmission between the main body portion section and the panel are performed using different mechanisms.
(5) The inhalation device according to any one of (1) to (4), in which
   the panel further includes a first communication unit (a communication unit 14),
   the main body portion further includes a second communication unit (communication units 115A, 115B), and
   the first communication unit transmits sensing data obtained by sensing by the sensor to the second communication unit.
   According to (5), the main body portion can obtain the sensing data obtained by the sensing of the sensor provided in the panel.
(6) The inhalation device according to (5), in which
   the inhalation device delivers, to a user, aerosol generated by heating an aerosol source,
   the sensor is a sensor for obtaining information related to the user, and
   the sensing data includes information related to the user in an inhalation period in which the aerosol is inhaled.
   According to (6), the main body portion can obtain the sensing data including the information related to the user in the inhalation period in which the aerosol is inhaled.
(7) The inhalation device according to (5) or (6), in which
   the sensor is a sensor for obtaining information related to a user, and
   the sensing data includes information related to the user touching the sensor.
      According to (7), the main body portion can obtain the sensing data including the information related to the user touching the sensor.
(8) The inhalation device according to any one of (4) to (7), in which
   the panel further includes a battery chargeable by the electric power fed by the power feeding unit and configured to feed electric power to the sensor, and
   the first communication unit transmits charging data related to charging of the battery to the second communication unit when the battery is charged.
      According to (8), when the battery is being charged with the electric power fed from the main body portion, since the charging data related to the charging of the battery is transmitted to the main body portion, the battery can be appropriately charged.
(9) The inhalation device according to (8), in which
   the first communication unit transmits sensing data obtained by sensing of the sensor to the second communication unit when the battery is not charged.
   According to (9), it is possible to transmit the sensing data to the main body portion while enabling appropriate charging of the battery.
(10) The inhalation device according to (9), in which
   the first communication unit transmits the sensing data after the charging of the battery is completed.
   According to (10), the battery can be charged quickly compared with a case where the battery is charged after the sensing data is transmitted.
(11) The inhalation device according to (9) or (10), in which
   the inhalation device delivers aerosol generated by heating an aerosol source to a user,
   the sensor is a sensor for obtaining information related to the user,
   the sensing data includes information related to the user in an inhalation period in which the aerosol is inhaled, and
   the first communication unit transmits the sensing data after the inhalation period ends and when the battery is not charged.
   According to (11), it is possible to transmit the sensing data to the main body portion while enabling appropriate charging of the battery.
(12) The inhalation device according to any one of (4) to (11), in which
   the main body portion further includes a control unit configured to control an operation of the inhalation device based on data received by the second communication unit from the first communication unit.

According to (12), it is possible to cause the inhalation device to perform an operation corresponding to the data received from the panel.

### REFERENCE SIGNS LIST

10 panel
11b battery
12 sensor unit (sensor)
12a sensor
14 communication unit (first communication unit)
100A, 100B inhalation device
110A, 110B power supply unit (main body portion)
111A, 111B power supply portion (power supply)
115A, 115B communication unit (second communication unit)
119A, 119B power feeding unit

## Claims

1. An inhalation device comprising:
a main body portion; and
a panel attachable to and detachable from the main body portion, wherein
the panel includes a sensor configured to operate when electric power is fed,
the main body portion includes a power supply and a power feeding unit configured to feed electric power of the power supply to the mounted panel, and
the power feeding unit feeds the electric power of the power supply by non-contact electric power transmission.

2. The inhalation device according to claim 1, wherein
the panel further includes a battery chargeable by the electric power fed by the power feeding unit and configured to feed electric power to the sensor

3. The inhalation device according to claim 1 or 2, wherein
the non-contact electric power transmission is electric power transmission by near field communication.

4. The inhalation device according to claim 3, wherein
the panel further includes a first communication unit,
the main body portion further includes a second communication unit, and
the first communication unit and the second communication unit communicate with each other through the near field communication.

5. The inhalation device according to any one of claim 1 to 4, wherein
the panel further includes a first communication unit,
the main body portion further includes a second communication unit, and
the first communication unit transmits sensing data obtained by sensing by the sensor to the second communication unit.

6. The inhalation device according to claim 5, wherein
the inhalation device delivers, to a user, aerosol generated by heating an aerosol source,
the sensor is a sensor for obtaining information related to the user, and
the sensing data includes information related to the user in an inhalation period in which the aerosol is inhaled.

7. The inhalation device according to claim 5 or 6, wherein
the sensor is a sensor for obtaining information related to a user, and
the sensing data includes information related to the user touching the sensor

8. The inhalation device according to any one of claims 4 to 7, wherein
the panel further includes a battery chargeable by the electric power fed by the power feeding unit and configured to feed electric power to the sensor, and
the first communication unit transmits charging data related to charging of the battery to the second communication unit when the battery is charged.

9. The inhalation device according to claim 8, wherein
the first communication unit transmits sensing data obtained by sensing of the sensor to the second communication unit when the battery is not charged.

10. The inhalation device according to claim 9, wherein
the first communication unit transmits the sensing data after the charging of the battery is completed.

11. The inhalation device according to claim 9 or 10, wherein
the inhalation device delivers aerosol generated by heating an aerosol source to a user,
the sensor is a sensor for obtaining information related to the user,
the sensing data includes information related to the user in an inhalation period in which the aerosol is inhaled, and the first communication unit transmits the sensing data, after the inhalation period ends and when the battery is not charged.

12. The inhalation device according to any one of claim 4 to 11, wherein
the main body portion further includes a control unit configured to control an operation of the inhalation device based on data received by the second communication unit from the first communication unit.
